# EUROPÄISCHE PATENTSCHRIFT

(11) **EP 3 913 259 B1**
(45) Veröffentlichungstag und Bekanntmachung des Hinweises auf die Patenterteilung: **06.03.2024**
(21) Anmeldenummer: 21174648.2
(22) Anmeldetag: 19.05.2021
(51) Int. Cl.: F16H 57/00, F16H 57/033, F16H 57/025, F16H 57/023, H02K 7/116

(54) **VERFAHREN ZUM HERSTELLEN EINES GETRIEBESYSTEMS**
METHOD FOR PRODUCING A GEAR SYSTEM
PROCÉDÉ DE FABRICATION D'UN SYSTÈME DE CHANGEMENT DE VITESSES

(30) Priorität: 20.05.2020 LU 101818
(43) Veröffentlichungstag der Anmeldung: 24.11.2021
(73) Patentinhaber: Nabtesco Precision Europe GmbH, 40472 Düsseldorf (DE)
(72) Erfinder: Pawliszak, Marco, 45525 Hattingen (DE)
(74) Vertreter: Hoffmann, Jürgen

(56) Entgegenhaltungen:
- EP-A1- 0 567 048
- DE-A1-102013 003 165
- DE-A1-102019 003 546
- US-A- 5 651 747

## Beschreibung

Die Erfindung betrifft ein Verfahren zum Herstellen eines Getriebesystems.

Die Erfindung betrifft außerdem ein nach dem erfindungsgemäßen Verfahren hergestelltes Getriebesystem sowie eine Antriebsvorrichtung mit einem solchen Getriebesystem.

Um eine Antriebsvorrichtung, wie beispielsweise einen Antriebsmotor, an ein anzutreibendes System anzukoppeln, ist es oftmals nötig, ein Getriebe triebtechnisch dazwischen zu schalten. Hierbei muss einerseits eine Abtriebswelle der Antriebsvorrichtung über das Getriebe mit einem Eingang des anzutreibenden Systems wirkverbunden werden und muss außerdem zusätzlich eine drehmomentabstützende Verbindung eines Antriebs-Drehmomentabstützelements der Antriebsvorrichtung, beispielsweise eines Antriebsgehäuses eines Antriebsmotors, zu einem Drehmomentabstützelement des anzutreibenden Systems (zumeist ein Gehäuse oder eine Halterung) hergestellt werden.

Antriebsvorrichtungen, wie beispielsweise Antriebsmotore, können ganz unterschiedlich aufgebaut sein. Beispielsweise können sich Antriebsvorrichtungen hinsichtlich des Durchmessers und/oder der Länge einer Abtriebswelle oder hinsichtlich der Form, der Größe und der Befestigungsmöglichkeiten eines Antriebsgehäuses voneinander unterscheiden. Insbesondere können sich Antriebsvorrichtungen auch hinsichtlich einer Antriebsleistung und/oder einer Antriebsdrehzahl voneinander unterscheiden. Auch anzutreibende Systeme können sich ganz erheblich voneinander unterscheiden. Beispielsweise können sich anzutreibende Systeme hinsichtlich der erforderlichen Antriebsleistung und/oder des erforderlichen Antriebsdrehmomentes und/oder einer Antriebsaufnahme für die Abtriebswelle eines Getriebes und/oder hinsichtlich der Form und/oder der Größe und/oder der Befestigungsmöglichkeiten für ein antreibendes System unterscheiden. Aus diesem Grund ist es zumeist nötig, jeweils individuell und speziell ein passendes Getriebesystem derart herzustellen, dass es einerseits an die jeweilige Antriebsvorrichtung und andererseits an das jeweilige anzutreibende System angekoppelt werden kann. Dies ist insbesondere sehr zeit- und kostenaufwändig.

Aus DE 10 2013 003 165 A1 ist ein Adaptersystem bekannt, bei dem ein Adapter zwischen einem Getriebegehäuse und einem Motorgehäuse zwischengeordnet ist. Der Adapter ist als einstückiges Ringteil ausgeführt, wobei er einen Grundringabschnitt und einen Zentrierringabschnitt aufweist. Der Grundringabschnitt weist ein getriebeseitiges Lochbild und ein motorseitiges Lochbild auf; wobei ein jeweiliges Lochbild aus einer jeweiligen Anordnung von Bohrungen besteht. In Umfangsrichtung ist zwischen jeder Bohrung des getriebeseitigen Lochbildes und jeder zu dieser Bohrung nächstbenachbarten Bohrung des motorseitigen Lochbildes im Adapter jeweils eine unrunde Ausnehmung angeordnet. Ferner offenbart DE 10 2013 003165 A1 eine Vielzahl von Getriebeeinheiten, von Ankoppelvorrichtungen und von Übertragungswellen um ein Getriebesystem herzustellen.

Aus EP 0 567 048 A1 ist ein Getriebe-Motor-Adapter Bausatz zum Verbinden eines Motors und eines zugehörigen Getriebes eine Getriebemotorenserie bekannt. Die Getriebemotorenserie kann verschiedene Arten von Übersetzungs- oder Untersetzungsgetrieben beinhalten.

US 5 651 747 offenbart eine Serie von Getriebemotoren, bei der die Mehrzahl Getriebemotoren verschiedene Motoren und Getriebe in Kombination umfasst.

Aus DE 10 2019 003 546 A1 ist ein Adapter für einen Antrieb, welcher einen Elektromotor mit Motorwelle, insbesondere Rotorwelle, und ein Getriebe aufweist. Der Adapter weist ein Gehäuseteil, eine Adapterwelle mit Ringbuchsenteil, ein erstes und ein zweites Lager, ein Kupplungsteil, in welche die Motorwelle einsteckbar ist, einen Klemmring mit einer radial gerichteten Gewindebohrung, einen Gewindestift und ein Ringteil auf. Das erste und das zweite Lager sind im Gehäuseteil aufgenommen, wobei die Adapterwelle mit Ringbuchsenteil mittels des ersten und zweiten Lagers drehbar gelagert ist und wobei das Kupplungsteil formschlüssig der Adapterwelle verbunden ist und wobei das Ringteil im Gehäuseteil aufgenommen ist oder als Flanschteil mit dem Gehäuseteil den Lagersitz des zweiten Lagers bildend verbunden ist und wobei der Gewindestift zumindest teilweise in die Radialbohrung des Klemmrings eingeschraubt ist und in eine erste Bohrung, insbesondere radial durch das Ringteil durchgehende Bohrung, des Ringteils derart teilweise hineinragt, dass der von dem Gewindestift überdeckte Radialabstandsbereich sowohl mit dem von dem Ringteil als auch mit dem von dem Klemmring überdeckten Radialabstandsbereiche überlappt.

Es ist die Aufgabe der vorliegenden Erfindung ein Verfahren anzugeben, dass es ermöglicht, schnell Getriebesysteme bereitstellen zu können, die jeweils individuell an die durch die jeweilige Antriebsvorrichtung und das jeweilige anzutreibende System vorgegebenen Randbedingungen angepasst sind. Ferner werden die Achsabweichungen zwischen der Abtriebswelle des Getriebes und der Antriebswelle des Motors reduziert.

Die Aufgabe wird durch ein Verfahren gemäß dem Anspruch 1 gelöst.

Das erfindungsgemäße Verfahren hat den ganz besonderen Vorteil, dass es auf äußerst effiziente und individuell anpassbare Art und Weise die Herstellung eines Getriebesystems ermöglicht, das den jeweils geforderten individuellen Randbedingungen zur Ankopplung an eine Antriebsvorrichtung einerseits und zur Ankopplung an ein anzutreibendes System andererseits genügt.

Durch das erfindungsgemäße Verfahren ist es ermöglicht, in kurzer Zeit, effizient und kostensparend ein passendes Getriebesystem für eine Vielzahl von Anwendungssituationen zur Verfügung zu stellen, ohne dass hierfür zweitaufwendig und kostenaufwendig individuell eine Lösung speziell konstruiert und einzeln aufwendig angefertigt werden muss. Dadurch, dass es erfindungsgemäß ermöglicht ist, eine Vielzahl unterschiedlicher zuvor bereit gehaltener einzelner Komponenten miteinander kombinieren zu können, kann beispielsweise für hunderte oder tausende von Anwendungssituationen in kurzer Zeit, effizient und kostensparend ein jeweils passendes Getriebesystem zur Verfügung gestellt werden.

Dadurch, dass die Getriebeeinheiten ein für alle Getriebeeinheiten gleiches Drehmomentabstützelement zur Fixierung an einer Ankoppelvorrichtung aufweisen und dadurch, dass die Ankoppelvorrichtungen ein für alle Getriebeeinheiten gleiches Anbauelement aufweist, das als Gegenstück zu den gleichen Drehmomentabstützelementen derart ausgebildet, insbesondere dimensioniert, ist, dass jede Getriebeeinheit der Vielzahl von Getriebeeinheiten an jede der Ankoppelvorrichtungen montierbar ist, kann jede der Getriebeeinheiten auf einfache und immer gleiche Weise an jede der Ankoppelvorrichtungen montiert werden.

Die Getriebeeinheiten können sich insbesondere hinsichtlich wenigstens eines Drehmomentparameters voneinander unterscheiden. Ein Drehmomentparameter kann beispielsweise das Nenndrehmoment, nämlich das maximale Abtriebsdrehmoment bei konstanter Drehzahl, betreffen. Ein Drehmomentparameter kann beispielsweise das Spitzendrehmoment, nämlich das maximale Anlauf- und Bremsdrehmoment, betreffen. Ein Drehmomentparameter kann beispielsweise auch das Kollisionsdrehmoment, nämlich das maximale Drehmoment bei NOT-Aus oder bei einer Kollision, betreffen. Die Getriebeeinheiten können sich alternativ oder zusätzlich auch hinsichtlich der Bauform und/oder hinsichtlich des Übersetzungsverhältnisses und/oder eines Drehmomentparameters und/oder in der Größe und/oder hinsichtlich des Materials voneinander unterscheiden.

Die Ankoppelvorrichtungen können sich ebenfalls voneinander unterscheiden, solange sicher gestellt ist, dass jede Ankoppelvorrichtung ein für alle Getriebeeinheiten gleiches Anbauelement aufweist, das als Gegenstück zu den gleichen Drehmomentabstützelementen derart ausgebildet, insbesondere dimensioniert, ist, dass jede Getriebeeinheit der Vielzahl von Getriebeeinheiten an jede der Ankoppelvorrichtungen montierbar ist. Die Ankoppelvorrichtungen können sich beispielsweise hinsichtlich der Form und/oder Größe und/oder hinsichtlich des Materials voneinander unterscheiden.

Insbesondere kann vorteilhaft vorgesehen sein, dass sowohl eine erste Vielzahl von ersten Getriebeeinheiten und eine erste Vielzahl von zweiten Ankoppelvorrichtungen bereit gestellt wird, wobei nach einem Auswählen einer der ersten Getriebeeinheiten und einer der zweiten Ankoppelvorrichtungen die ausgewählte erste Getriebeeinheit an die ausgewählte erste Ankoppelvorrichtung montiert wird, und dass es eine zweite Vielzahl von zweiten Getriebeeinheiten und eine zweite Vielzahl von zweiten Ankoppelvorrichtungen bereit gestellt wird, wobei nach einem Auswählen einer der zweiten Getriebeeinheiten und einer der zweiten Ankoppelvorrichtungen die ausgewählte zweite Getriebeeinheit an die ausgewählte zweite Ankoppelvorrichtung montiert wird. Hierbei kann es durchaus sein, dass die ersten Getriebeeinheiten nicht mit den zweiten Ankoppelvorrichtungen kombinierbar sind und/oder dass die zweiten Getriebeeinheiten nicht mit den ersten Ankoppelvorrichtungen kombinierbar sind. Eine solche Vorgehensweise ist beispielsweise sinnvoll, wenn sowohl (insbesondere kleine) Getriebesysteme für sehr niedrige Drehmomente als auch (insbesondere große) Getriebesysteme für ganz besonders hohe Drehmomente hergestellt werden müssen. Natürlich kann in der gleichen Weise auch eine dritte Vielzahl von dritten Getriebeeinheiten und eine dritte Vielzahl von dritten Ankoppelvorrichtungen bereit gestellt werden, wobei nach einem Auswählen einer der dritten Getriebeeinheiten und einer der dritten Ankoppelvorrichtungen die ausgewählte dritte Getriebeeinheit an die ausgewählte dritte Ankoppelvorrichtung montiert wird. Eine solche Vorgehensweise beinhaltet das erfindungsgemäße Verfahren zweifach bzw. dreifach oder in einer noch höheren Anzahl. Gleiches gilt analog für die weiteren, nachfolgend erläuterten Komponenten des Getriebesystems, wie beispielsweise in Bezug die Auswahlmöglichkeit einer Übertragungswelle aus einer Vielzahl von Übertragungswellen oder die Auswahlmöglichkeit eines Motorflanschs aus einer Vielzahl von Motorflanschen.

Bei einer ganz besonders vorteilhaften Ausführung des erfindungsgemäßen Verfahrens weisen die Getriebeeinheiten der Vielzahl von Getriebeeinheiten jeweils einen Getriebeeingang auf, wobei die Getriebeeingänge der Vielzahl von Getriebeeinheiten vorzugsweise gleich ausgebildet sind. Dies hat den ganz besonderen Vorteil, dass die Ankopplung beispielsweise einer rotierbar gelagerten Übertragungswelle immer gleich ausgeführt werden kann. Vorzugsweise wird die ausgewählte Übertragungswelle mittels wenigstens eines Wälzlagers rotierbar gelagert. Hierdurch ist vorteilhaft eine verlustfreie Drehmomentübertragung gewährleistet.

Gemäß der Erfindung ist vorgesehen, dass jede Ankoppelvorrichtung der Vielzahl von Ankoppelvorrichtungen jeweils eine Übertragungswellen-Aufnahme zur rotierbaren Lagerung einer Übertragungswelle aufweist. Das erfindungsgemäße Verfahren beinhaltet den weiteren Schritt des Bereitstellens einer Vielzahl vor Übertragungswellen, die sich in der Form und/oder in der Größe und/oder hinsichtlich des Materials und/oder durch die Ausbildung eines Antriebsendes voneinander unterscheiden und von denen jede ein Abtriebsende aufweist, wobei die Abtriebsenden gleich und als, insbesondere formschlüssig einfügbare, Gegenstücke zu den Getriebeeingängen ausgebildet sind. Auf diese Weise wird vorteilhaft erreicht, dass jede der Übertragungswellen der Vielzahl von Übertragungswellen an den Getriebeeingang jeder Getriebeeinheit der Vielzahl von Getriebeeinheiten angekoppelt werden kann. Insbesondere ist es vorteilhaft beispielsweise möglich, eine Übertragungswelle aus der Vielzahl von Übertragungswellen auszuwählen, deren Antriebsende eine passende axiale Bohrung zum Aufnehmen der Abtriebswelle des vorgesehenen Antriebsmotors aufweist, und diese Übertragungswelle in die Übertragungswellen-Aufnahme der ausgewählten Ankoppelvorrichtung rotierbar einzubauen.

Das Antriebsende ist dazu ausgebildet, kraftschlüssig, insbesondere ausschließlich kraftschlüssig, mit der Abtriebswelle einer drehmomenteinspeisenden Antriebsvorrichtung verbunden zu werden. Diese Ausführung hat insbesondere den ganz besonderen Vorteil, dass die zumeist kreiszylinderförmig ausgebildeten Abtriebswellen üblicher Antriebsmotore unmittelbar angekoppelt werden können. Anders als beispielsweise bei einer formschlüssigen Steckverbindung ist außerdem die Gefahr eines ungewollten Verklemmens vermieden.

Insbesondere kann das Antriebsende als eine geschlitzte Hohlwelle mit einer axialen Bohrung ausgebildet sein. Vorzugsweise liegt die Differenz des Außendurchmessers des Antriebsendes zu dem Durchmesser der axialen Bohrung im Bereich von 3 mm bis 5 mm. Hierdurch ist sowohl eine ausreichende Torsionssteifigkeit, als auch eine zuverlässige drehfeste Klemmverbindung ermöglicht.

Bei einer vorteilhaften Ausführung weist das Antriebsende wenigstens zwei axial verlaufende Schlitze auf. Insbesondere kann das Antriebsende genau zwei axial verlaufende Schlitze aufweisen, die einander radial gegenüberliegend angeordnet sind. Eine solche Ausführung ist besonders vorteilhaft im Hinblick auf eine unwuchtfreie Rotation der Übertragungswelle, wobei dennoch gleichzeitig eine zuverlässige drehfeste Klemmverbindung ermöglicht ist. Hierfür kann vorteilhaft alternativ oder zusätzlich insbesondere vorgesehen sein, dass die Schlitze axial genauso lang sind, wie die axiale Bohrung.

An dem Antriebsende der ausgewählten Übertragungswelle wird ein Klemmring insbesondere mit einer tangential verlaufender Spannschraube angeordnet, mittels dem der Durchmesser der axialen Bohrung verringerbar ist. Ein solcher Klemmring ermöglicht es, eine Abtriebswelle an die Übertragungswelle anzukoppeln, zeitlich nachdem das Antriebsgehäuse eines Antriebsmotors mit dem Ankoppelvorrichtungsgehäuse verbunden wurde. Hierfür kann das Ankoppelvorrichtungsgehäuse eine, insbesondere radiale oder tangentiale, Öffnung aufweisen, durch die hindurch ein Werkzeug zu einem Kopf der Spannschraube führbar ist.

Vorzugsweise weist der Klemmring ausschließlich eine einzige Spannschraube auf, was eine einfache Montage ermöglicht (insbesondere im Hinblick darauf, dass das Antriebsgehäuse zum Zeitpunkt der Herstellung der Klemmverbindung bereits mit dem Ankoppelvorrichtungsgehäuse verbunden wurde).

Bei einer besonders vorteilhaften Ausführung weist der Klemmring einen einteiligen geschlitzten Ring auf, dessen freie Enden mittels der Spannschraube einander annäherbar sind.

Das Verfahren kann auch das Bereitstellen einer Vielzahl von unterschiedlichen Klemmringen und das Auswählen sowie das Montieren eines ausgewählten Klemmrings beinhalten.

In vorteilhafter Weise kann insbesondere vorteilhaft vorgesehen sein, dass durch ein einfaches Einstecken des Abtriebsendes in den Getriebeeingang eine drehmomentübertragende Verbindung hergestellt wird. Insbesondere können die Abtriebsenden und die Aufnahmen vorteilhaft derart ausgebildet sein, dass außerdem Einstecken keine weiteren Handlungen erforderlich sind, um eine drehmomentübertragende Verbindung herzustellen. Auf diese Weise wir eine besonders einfache und kostengünstige Montierbarkeit erreicht.

Beispielsweise kann jedes Abtriebsende eine Außenverzahnung aufweisen, die mit wenigstens einer Verzahnung des Getriebeeingangs in kämmendem Zahneingriff gebracht wird, um eine drehmomentübertragende Verbindung herzustellen. Hierbei kann beispielsweise vorgesehen sein, dass der Getriebeeingang mehrere Verzahnungen aufweist, die durch die Exzenterwellenaußenverzahnungen der Exzenterwellen eines Zykloidgetriebes gebildet sind.

Jede Übertragungswelle der Vielzahl von Übertragungswellen weist ein Antriebsende auf, das dazu ausgebildet und bestimmt ist, mit einem Endabschnitt einer Abtriebswelle einer drehmomenteinspeisenden Antriebsvorrichtung, insbesondere mit einer Abtriebswelle eines Antriebsmotors, drehfest verbunden zu werden. Insbesondere kann vorteilhaft vorgesehen sein, dass das Antriebsende dazu ausgebildet ist, kraftschlüssig, insbesondere ausschließlich kraftschlüssig, mit der Abtriebswelle einer drehmomenteinspeisenden Antriebsvorrichtung verbunden zu werden. Beispielsweise kann das Antriebsende als eine geschlitzte Hohlwelle mit einer axialen Bohrung ausgebildet sein. Insbesondere kann das Antriebsende jeder Antriebswelle eine axiale Bohrung zum Aufnehmen einer Abtriebswelle einer drehmomenteinspeisenden Antriebsvorrichtung oder zum Aufnehmen einer Ausgleichshülse aufweisen.

Bei einer ganz besonders vorteilhaften Ausführung weisen mehrere Übertragungswellen der Vielzahl von Übertragungswellen eine axiale Bohrung auf, wobei der Innendurchmesser der axialen Bohrungen gleich ist. In vorteilhafter Weise kann die Vielzahl von Übertragungswellen Gruppen von Übertragungswellen mit gleicher axialer Bohrung, beispielsweise jeweils im Durchmesser gängiger und üblicher Abtriebswellen von Antriebsmotoren, aufweisen.

Bei einer ganz besonders vorteilhaften Ausführung beinhaltet das Verfahren den weiteren Schritt des Bereitstellens einer Vielzahl von, insbesondere zylinderförmigen und/oder geschlitzten, Ausgleichshülsen, die sich in Form und/oder Größe und/oder Material und/oder Hülseninnendurchmesser voneinander unterscheiden und die formschlüssig in die axiale Bohrung einfügbar sind. In weiteren Schritten wird eine für die jeweilige Anwendung passende Ausgleichshülse aus der Vielzahl von Ausgleichshülsen ausgewählt und in die axiale Bohrung der ausgewählten Übertragungswelle eingesteckt. Durch die Verwendung von (insbesondere im Hinblick auf Innendurchmesser und Außendurchmesser) unterschiedlichen Ausgleichshülsen, insbesondere in Kombination mit unterschiedlichen Übertragungswellen, wird eine ganz besonders große Flexibilität zur Anpassung des herzustellenden Getriebesystems an die vorgegebenen Randbedingungen erreicht.

Vorzugsweise weist jede Ankoppelvorrichtung ein Ankoppelvorrichtungsgehäuse auf. Insbesondere kann vorteilhaft vorgesehen sein, dass wenigstens ein Teil des Anbauelements durch einen Abschnitt des Ankoppelvorrichtungsgehäuses gebildet ist. Beispielsweise kann das Anbauelement eine in dem Ankoppelvorrichtungsgehäuse ausgebildete Aufnahme, insbesondere einen innen umlaufenden Falz und/oder einen Axialanschlag aufweisen.

Bei einer besonders vorteilhaften Ausführung sind wenigstens einige der Ankoppelvorrichtungsgehäuse der Vielzahl von Ankoppelvorrichtungen wenigstens in einem Teilabschnitt rotationssymmetrisch ausgebildet. Dies hat den ganz besonderen Vorteil einer besonders kompakten Bauweise. Ebenfalls im Hinblick auf eine möglichst kompakte Bauweise kann das Ankoppelvorrichtungsgehäuse wenigstens in einem Teilabschnitt außen eine Glockenform oder eine Kegelstumpfform aufweisen. Eine solche Form hat den weiteren Vorteil, dass ein einfaches Reinigen ermöglicht ist.

Hinsichtlich des Materials, aus dem ein Ankoppelvorrichtungsgehäuse hergestellt ist, gibt es keine grundsätzlichen Beschränkungen. Allerdings muss das Ankoppelvorrichtungsgehäuse ausreichend stabil ausgebildet sein, um die auftretenden Drehmomente abstützen zu können. Das Ankoppelvorrichtungsgehäuse kann vorteilhaft insbesondere aus Stahl oder aus Titan oder aus Edelstahl oder aus Aluminium hergestellt sein. Insbesondere kann das Ankoppelvorrichtungsgehäuse aus einem Material hergestellt sein, das Stahl oder Titan oder Edelstahl oder Aluminium beinhaltet.

Insbesondere um eine einfache und sichere Fixierung der Getriebeeinheit zu ermöglichen, kann das Anbauelement, insbesondere axial verlaufende, Gewindebohrungen für Befestigungsschrauben zum Befestigen einer Getriebeeinheit aufweisen.

Die Ankoppelvorrichtungsgehäuse können sich beispielsweise in der Bauform und/oder in der Größe und/oder hinsichtlich des Materials voneinander unterscheiden, wobei jedoch vorzugsweise jedes Ankoppelvorrichtungsgehäuse ein Motorflansch-Anbauelement aufweist und wobei die Motorflansch-Anbauelemente alle gleich ausgebildet sind. Eine solche Ausführung ermöglicht es vorteilhaft, eine einfache Kombinierbarkeit mit unterschiedlichen Motorflanschen, die jedoch alle ein passendes, gleiches Gegenanbauelement aufweisen, an das Ankoppelvorrichtungsgehäuse zu montieren.

Insoweit kann das Verfahren vorteilhaft den weiteren Schritt beinhalten: Bereitstellen einer Vielzahl von Motorflanschen, von denen jeder zum unmittelbaren Ankoppeln an eine drehmomenteinspeisenden Antriebsvorrichtung, insbesondere an einen Antriebsmotor, ausgebildet ist, wobei jeder Motorflansch ein Motorflansch-Gegenanbauelement aufweist, das als Gegenstück zu den gleichen Motorflansch-Anbauelementen derart ausgebildet, insbesondere dimensioniert, ist, dass jeder Motorflansch der Vielzahl von Motorflanschen an jedes der Ankoppelvorrichtungsgehäuse montierbar ist. Hierbei ist es vorteilhaft insbesondere möglich und vorteilhaft, wenn sich die Motorflansche in der Bauform und und/oder in der Größe und/oder hinsichtlich des Materials voneinander unterscheiden. Ein Motorflansch kann Durchgangsbohrungen und/oder Gewindebohrungen aufweisen. Beispielsweise kann ein erster Motorflansch der Vielzahl von Motorflanschen ein spezielles Flansch-Lochbild zur Ankopplung an das Antriebsmotorgehäuse eines ersten Antriebsmotors aufweisen, während ein zweiter Motorflansch der Vielzahl von Motorflanschen ein ganz anders Flansch-Lochbild zur Ankopplung an das Antriebsmotorgehäuse eines zweiten Antriebsmotors aufweist.

Bei einer ganz besonders vorteilhaften Ausführung beinhaltet das Verfahren die weiteren Schritte des Auswählens eines Motorflanschs aus der Vielzahl von Motorflanschen und des Montierens des ausgewählten Motorflanschs an das Ankoppelvorrichtungsgehäuse der ausgewählten Ankoppelvorrichtung.

Bei einer ganz besonders vorteilhaften Ausführung des Verfahrens ist jede Getriebeeinheit der Vielzahl von Getriebeeinheiten als vormontierte und funktionsfähige modulare Baueinheit ausgebildet und/oder als Ganzes handhabbar. Dies bedeutet insbesondere, dass jede Getriebeeinheit moniert werden kann, ohne zuvor Teile von der Getriebeeinheit dauerhaft oder vorübergehend demontieren zu müssen und ohne Teile der Getriebeeinheit nachträglich, insbesondere nach einem Montieren an eine Ankoppelvorrichtung, anbringen zu müssen. Eine solche Vorgehensweise ermöglicht einen einfachen Zusammenbau. Alternativ ist es allerdings auch möglich, einzelne Teile der jeweiligen Getriebeeinheit nacheinander an oder in die Ankoppelvorrichtung zu montieren. Besonders vorteilhaft ist jedoch eine Ausführung, bei der jeweils lediglich und ausschließlich ein Drehmomentabstützelement der ausgewählten Getriebeeinheit an die ausgewählte Ankoppelvorrichtung, insbesondere an das Ankoppelvorrichtungsgehäuse der ausgewählten Ankoppelvorrichtung, angeschraubt wird und die drehmomentübertragende Verbindung der Übertragungswelle durch ein einfaches Einstecken des Abtriebsendes der Übertragungswelle in den Getriebeeingang hergestellt wird.

Es kann vorteilhaft vorgesehen sein, dass jede Getriebeeinheit ein Getriebe derselben Getriebeart aufweist. Insbesondere kann vorteilhaft vorgesehen sein, dass jede Getriebeeinheit ein Zykloidgetriebe aufweist. Beispielsweise können die Getriebeeinheiten auch Planetengetriebe oder Spannungswellengetriebe aufweisen.

Es ist jedoch auch möglich, dass sich die Getriebeeinheiten hinsichtlich der Getriebeart voneinander unterscheiden. Beispielsweise können einige der Getriebeeinheiten Zykloidgetriebe aufweisen, während andere der Getriebeeinheiten Planetengetriebe oder Spannungswellengetriebe aufweisen.

Bei einer ganz besonders vorteilhaften Ausführung des Verfahrens ist jede Ankoppelvorrichtung der Vielzahl von Ankoppelvorrichtungen als vormontierte und funktionsfähige modulare Baueinheit ausgebildet und/oder als Ganzes handhabbar. Eine solche Vorgehensweise ermöglicht einen einfachen Zusammenbau. Wie bereits erwähnt, können sich die Ankoppelvorrichtungen der Vielzahl von Ankoppelvorrichtungen in der Bauform und/oder hinsichtlich in der Größe und/oder hinsichtlich des Materials voneinander unterscheiden. Auf diese Weise wird eine ganz besonders große Flexibilität zur Anpassung des herzustellenden Getriebesystems an die vorgegebenen Randbedingungen erreicht.

Vorzugsweise wird jedes Getriebesystem als fertig montierte und funktionsfähige Baueinheit hergestellt, die an eine drehmomenteinspeisende Antriebsvorrichtung und/oder ein anzutreibendes System ankoppelbar ist, ohne hierfür Teile der Ankoppelvorrichtung demontieren zu müssen. Auf diese Weise werden Montagefehler am Einbauort vermieden.

Von ganz besonderem Vorteil ist ein Getriebesystem, das gemäß dem erfindungsgemäßen Verfahren hergestellt ist.

Insbesondere kann das Getriebesystem vorteilhaft derart ausgebildet sein, dass eine drehstarre, koaxiale Verbindung der Übertragungswelle mit der Abtriebswelle einer drehmomenteinspeisenden Antriebsvorrichtung herstellbar ist, ohne hierfür Teile der Ankoppelvorrichtung demontieren zu müssen.

Insbesondere kann das Getriebesystem vorteilhaft als eigenständige, vom Hersteller fertig zusammengebaute und hinsichtlich einer ordnungsgemäßen Funktionsfähigkeit getestete Baueinheit hergestellt werden, die vom Verwender als Ganzes mit einer drehmomenteinspeisenden Antriebsvorrichtung und einem anzutreibenden System gekoppelt werden kann. Insbesondere wird das Getriebesystem vorzugsweise derart ausgebildet, dass sie angekoppelt werden kann, ohne sie zuvor teilweise zerlegen zu müssen, was zum einen den Montagevorgang an sich vereinfacht und darüber hinaus gewährleistet, dass das Getriebesystem in dem Zustand zum Einsatz kommt, in dem es hinsichtlich seiner Funktionsfähigkeit, insbesondere unmittelbar nach ihrer Herstellung, getestet wurde.

Ebenfalls von ganz besonderem Vorteil ist Antriebssystem, das eine drehmomenteinspeisende Antriebsvorrichtung und ein solches Getriebesystem beinhaltet. Die Antriebsvorrichtung kann insbesondere ein, insbesondere elektrischer, Antriebsmotor sein. Hierbei kann insbesondere vorgesehen sein, dass der Antriebsmotor unmittelbar an die Ankoppelvorrichtung angekoppelt ist. Es ist insbesondere auch möglich, dass die Antriebsvorrichtung einen, insbesondere elektrischen, Antriebsmotor aufweist, wobei insbesondere vorgesehen sein kann, dass die Antriebsvorrichtung ein weiteres Getriebe aufweist, das unmittelbar an die Ankoppelvorrichtung angekoppelt ist. Insbesondere kann die Antriebsvorrichtung ein Getriebemotor sein, der das weitere Getriebe beinhaltet, oder einen Getriebemotor, der das weitere Getriebe aufweist, aufweisen.

Das Antriebssystem kann vorteilhaft als eine vormontierte und einsatzfertige Baueinheit hergestellt werden, die am Einsatzort montiert werden kann, ohne hierfür Bauteile des Antriebssystems wieder demontieren zu müssen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine Illustration der Schritte beim Ausführen eines Ausführungsbeispiels eines erfindungsgemäßen Verfahrens,
- Fig. 2: ein nach dem erfindungsgemäßen Verfahren hergestelltes Getriebesystem, und
- Fig. 3: das Getriebesystem nach dem Ankoppeln an eine drehmomenteinspeisende Antriebsvorrichtung und an ein anzutreibendes System.

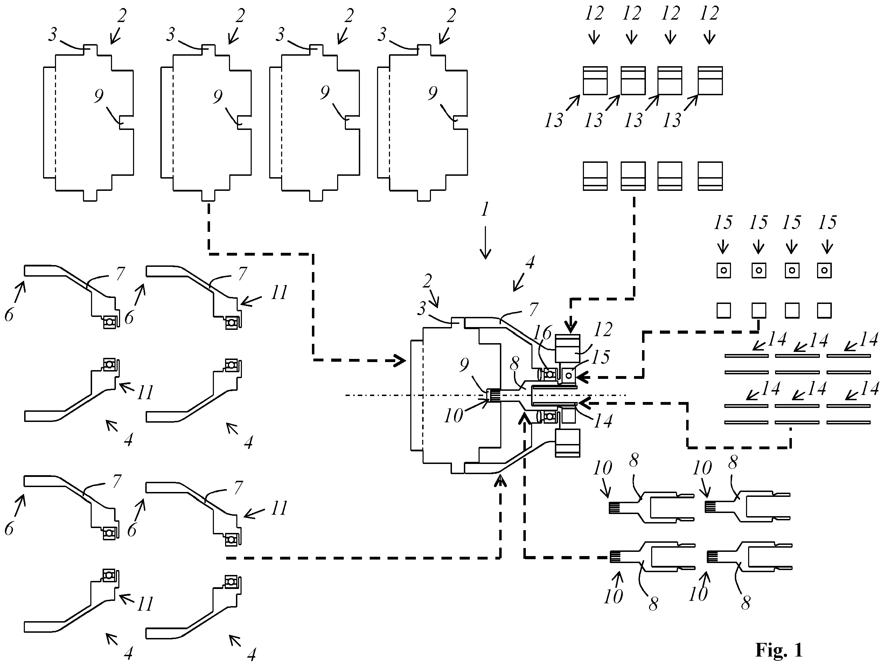

Fig. 1 zeigt eine Illustration der Schritte beim Ausführen eines Ausführungsbeispiels eines erfindungsgemäßen Verfahrens zum Herstellen eines Getriebesystems 1.

Das Verfahren beinhaltet den Schritt des Bereitstellens einer Vielzahl von Getriebeeinheiten 2, die sich in der Bauform und/oder hinsichtlich des Übersetzungsverhältnisses und/oder eines Drehmomentparameters und/oder in der Größe und/oder hinsichtlich des Materials voneinander unterscheiden und die jeweils ein für alle Getriebeeinheiten gleiches Drehmomentabstützelement 3 zur Fixierung an einer Ankoppelvorrichtung 4 aufweisen. In der schematischen Figur sind die Abbildungen der Getriebeeinheiten 2 der Einfachheit und Übersichtlichkeit halber gleich dargestellt, obwohl sich die Getriebeeinheiten 2, wie oben erwähnt, in der Bauform und/oder hinsichtlich des Übersetzungsverhältnisses und/oder eines Drehmomentparameters und/oder in der Größe und/oder hinsichtlich des Materials voneinander unterscheiden.

Das Verfahren beinhaltet außerdem den Schritt des Bereitstellens einer Vielzahl von Ankoppelvorrichtungen 4, von denen jede ein Ankoppelvorrichtungsgehäuse 7 aufweist und von denen jede zum drehmomentübertragenden Ankoppeln einer (in dieser Figur nicht dargestellten) drehmomenteinspeisenden Antriebsvorrichtung 5, insbesondere eines Antriebsmotors, an ein Getriebe ausgebildet ist und von denen jede ein für alle Getriebeeinheiten 2 gleiches Anbauelement 6 aufweist, das als Gegenstück zu den gleichen Drehmomentabstützelementen 3 derart ausgebildet, insbesondere dimensioniert, ist, dass jede Getriebeeinheit 2 der Vielzahl von Getriebeeinheiten 2 an jede der Ankoppelvorrichtungen 4 montierbar ist. In der schematischen Figur sind die Abbildungen der Ankoppelvorrichtungen 4 der Einfachheit und Übersichtlichkeit halber gleich dargestellt, obwohl sich die Ankoppelvorrichtungen 4 in der Bauform und/oder hinsichtlich in der Größe und/oder hinsichtlich des Materials voneinander unterscheiden.

Das Verfahren beinhaltet außerdem die Schritte des Auswählens einer Getriebeeinheit 2 aus der Vielzahl von Getriebeeinheiten 2 und des Auswählens einer Ankoppelvorrichtung 4 aus der Vielzahl von Ankoppelvorrichtungen 4.

Das Verfahren beinhaltet außerdem den Schritt des Montierens der ausgewählten Getriebeeinheit 2 an die ausgewählte Ankoppelvorrichtung 4 durch Herstellen einer drehmomentübertragenden Verbindung eines Abtriebsendes 10 einer Übertragungswelle 8 mit einem Getriebeeingang 9 der ausgewählten Getriebeeinheit 2 und durch Herstellen einer drehmomentabstützenden Verbindung zwischen dem Ankoppelvorrichtungsgehäuse 7 und dem Drehmomentabstützelement 3 der ausgewählten Getriebeeinheit 2.

Die Übertragungswelle 8 des Getriebesystems 1 wurde zuvor aus einer bereitgestellten Vielzahl von Übertragungswellen 8, die sich in der Form und/oder in der Größe und/oder hinsichtlich des Materials und/oder durch die Ausbildung eines Antriebsendes 10 voneinander unterscheiden und von denen jede ein Abtriebsende 10 aufweist, wobei die Abtriebsenden 10 gleich und als, insbesondere formschlüssig einfügbare, Gegenstücke zu den Getriebeeingängen 9 ausgebildet sind, ausgewählt. Anschließend wurde die ausgewählte Übertragungswelle 8 mittels eines Wälzlagers 16 rotierbar in das Ankoppelvorrichtungsgehäuse 7 der ausgewählten Ankoppelvorrichtung 4 eingebaut. Um dies zu ermöglichen, weist jede Ankoppelvorrichtung 4 der Vielzahl von Ankoppelvorrichtungen 4 jeweils eine Übertragungswellen-Aufnahme zur rotierbaren Lagerung einer Übertragungswelle 8 auf. Die Übertragungswelle 8 wird vorzugsweise rotierbar in das Ankoppelvorrichtungsgehäuse 7 der ausgewählten Ankoppelvorrichtung 4 eingebaut, bevor das die ausgewählte Getriebeeinheit 2 an dem Ankoppelvorrichtungsgehäuse 7 der ausgewählten Ankoppelvorrichtung 4 montiert wird.

In der schematischen Figur sind die Abbildungen der Übertragungswellen 8 der Einfachheit und Übersichtlichkeit halber gleich dargestellt, obwohl sich die Übertragungswellen 8 die sich in der Form und/oder in der Größe und/oder hinsichtlich des Materials und/oder durch die Ausbildung eines Antriebsendes 10 voneinander unterscheiden.

Die Ankoppelvorrichtungsgehäuse 7 unterscheiden sich, wie bereits erwähnt, in der Bauform und/oder in der Größe und/oder hinsichtlich des Materials voneinander. Jedes Ankoppelvorrichtungsgehäuse 7 weist ein Motorflansch-Anbauelement 11 auf, wobei die Motorflansch-Anbauelemente 11 alle gleich ausgebildet sind.

Das Verfahren beinhaltet außerdem den Schritt des Bereitstellens einer Vielzahl von Motorflanschen 12, von denen jeder zum unmittelbaren Ankoppeln an eine drehmomenteinspeisenden Antriebsvorrichtung 5, insbesondere an einen Antriebsmotor, ausgebildet ist, wobei jeder Motorflansch 12 ein Motorflansch-Gegenanbauelement 13 aufweist, das als Gegenstück zu den gleichen Motorflansch-Anbauelementen 11 derart ausgebildet, insbesondere dimensioniert, ist, dass jeder Motorflansch 12 der Vielzahl von Motorflanschen 12 an jedes der Ankoppelvorrichtungsgehäuse 7 montierbar ist. In der schematischen Figur sind die Abbildungen der Motorflansche 12 der Einfachheit und Übersichtlichkeit halber gleich dargestellt, obwohl sich die Motorflansche 12 in der Bauform und und/oder in der Größe und/oder hinsichtlich des Materials voneinander unterscheiden.

Das Verfahren beinhaltet außerdem die Schritte des Auswählens eines Motorflanschs 12 aus der Vielzahl von Motorflanschen 12 und des Montierens des ausgewählten Motorflanschs 12 an das Motorflansch-Anbauelement 11 des Ankoppelvorrichtungsgehäuses 7 der ausgewählten Ankoppelvorrichtung 4.

Das Verfahren beinhaltet den weiteren Schritt des Bereitstellens einer Vielzahl von, insbesondere zylinderförmigen und/oder geschlitzten, Ausgleichshülsen 14, die sich in Form und/oder Größe und/oder Material und/oder Hülseninnendurchmesser voneinander unterscheiden und die formschlüssig in die axiale Bohrung der Antriebsenden der Übertragungswellen 8 einfügbar sind. In weiteren Schritten wird eine für die jeweilige Anwendung passende Ausgleichshülse 14 aus der Vielzahl von Ausgleichshülsen 14 ausgewählt und in der axiale Bohrung der ausgewählten Übertragungswelle 8 montiert. In der schematischen Figur sind die Abbildungen der Ausgleichshülsen 14 der Einfachheit und Übersichtlichkeit halber gleich dargestellt, obwohl sich Ausgleichshülsen 14 in Form und/oder Größe und/oder Material und/oder Hülseninnendurchmesser voneinander unterscheiden.

Das Verfahren beinhaltet den weiteren Schritt des Bereitstellens einer Vielzahl von Klemmringen 15. Die Klemmringe 15 der Vielzahl von Klemmringen 15 unterscheiden sich voneinander, allerdings weist jeder Klemmring 15 einen Innendurchmesser auf, der zu dem Außendurchmesser am Antriebsende zumindest einer der Übertragungswellen 8 der Vielzahl von Übertragungswellen 8 passt. Es wird der für die ausgewählte Übertragungswelle 8 passende Klemmring 15 ausgewählt und montiert.

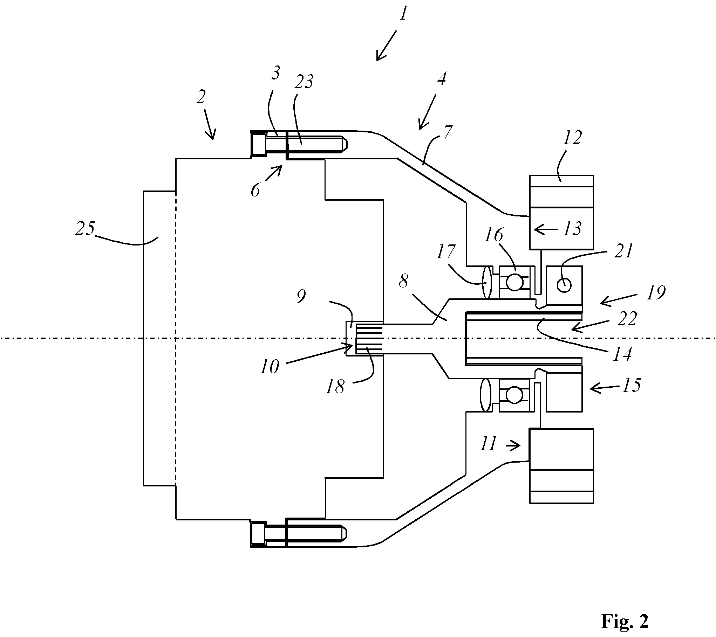

Figur 2 zeigt ein nach dem erfindungsgemäßen Verfahren hergestelltes Getriebesystem 1 in einer Querschnittsdarstellung. Das Getriebesystem 1 weist eine Getriebeeinheit 2 auf, die an das Ankoppelvorrichtungsgehäuse 7 einer Ankoppelvorrichtung 4 montiert ist. Ein Drehmomentabstützelement 3 der Getriebeeinheit 2 ist mittels Befestigungsschrauben 23 an das Anbauelement 6 des Ankoppelvorrichtungsgehäuses 7 geschraubt.

Innerhalb des Ankoppelvorrichtungsgehäuses 7 befindet sich eine mittels eines Wälzlagers 16 rotierbar gelagerte Übertragungswelle 8. Zur Abdichtung des Innenraums der Ankoppelvorrichtung 4 ist zwischen dem Ankoppelvorrichtungsgehäuse 7 und der Übertragungswelle 8 eine Wellendichtung 17 angeordnet.

Die Übertragungswelle 8 weist ein Abtriebsende 10 auf, das mit einem Getriebeeingang 9 der Getriebeeinheit 2 wirkverkoppelt ist. Beispielsweise kann das Abtriebsende 10 eine Außenverzahnung 18 aufweisen, die mit wenigstens einem (nicht dargestellten) Zahnrad der Getriebeeinheit 2 in Zahneingriff steht. Insbesondere kann es sich bei dem Getriebe 2 der Getriebeeinheit 2 um ein Zykloidgetriebe handeln. Bei einer solchen Ausführung kann vorteilhaft vorgesehen sein, dass die Außenverzahnung 18 des Abtriebsendes 10 der Übertragungswelle 8 in kämmendem Zahneingriff mit Außenverzahnungen der Exzenterwellen des Zykloidgetriebes steht.

Die Übertragungswelle 8 weist außerdem ein Antriebsende 19 auf, das dazu ausgebildet und bestimmt ist, kraftschlüssig (unmittelbar oder unter Zwischenschaltung einer Ausgleichshülse 14) mit der Abtriebswelle 20 einer Antriebsvorrichtung 5 drehfest und kraftschlüssig verbunden zu werden. Hierzu ist das Antriebsende 19 als geschlitzte Hohlwelle (vorzugsweise mit zwei axial verlaufenden Schlitzen, die in der Figur nicht dargestellt sind) ausgebildet, in die die Abtriebswelle 20 (direkt oder unter Zwischenschaltung einer Ausgleichshülse 14) eingesteckt und mittels eines Klemmrings 15, der eine Spannschraube 21 aufweist, festgeklemmt werden kann, um eine drehfeste Verbindung herzustellen. Zum Ausbilden der geschlitzten Hohlwelle weist das Antriebsende 19 eine axiale Bohrung 22 auf, in die eine Ausgleichshülse 14 eingesteckt ist.

An ein Motorflansch-Anbauelement 11 des Ankoppelvorrichtungsgehäuses 7 der Ankoppelvorrichtung 4 ist ein Motorflansch 12 montiert. Der Motorflansch 12 weist eine (nicht dargestellte) tangentiale Öffnung auf, durch die hindurch der Kopf der Spannschraube 21 mit einem Werkzeug, beispielsweise einem Innensechskantschlüssel oder einem Innenvielzahnschlüssel erreichbar ist, um die Klemmverbindung herzustellen, nachdem das Antriebsgehäuse 7 der Antriebsvorrichtung 5, beispielsweise mittels mehrerer nicht dargestellter) Befestigungsschrauben mit dem Motorflansch 12 verbunden wurde.

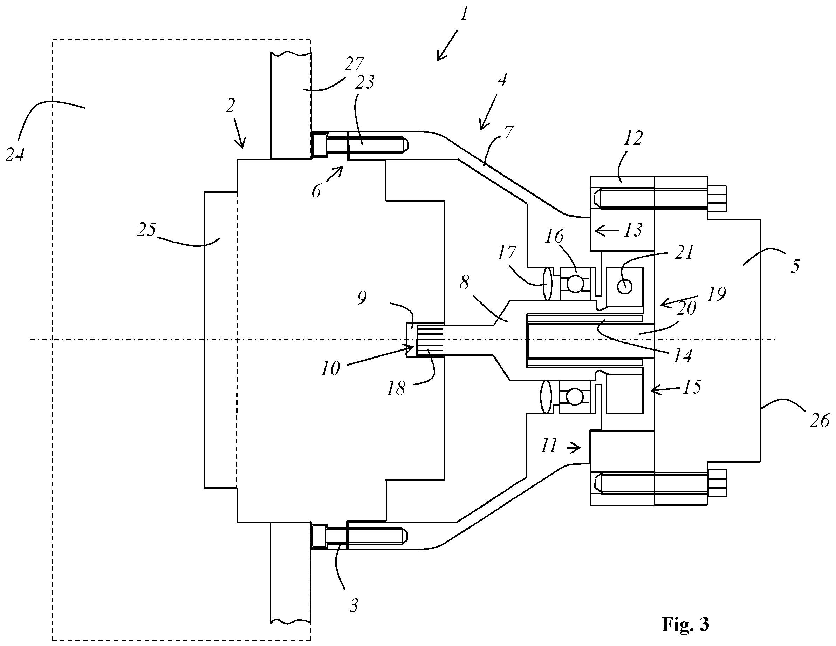

Figur 3 zeigt das Getriebesystem 1 nach dem Ankoppeln an eine drehmomenteinspeisende Antriebsvorrichtung 5 und an ein anzutreibendes System 24. Das Getriebesystem 1 fungiert als Wirkankopplung die drehmomenteinspeisende Antriebsvorrichtung 5 an das anzutreibende System 24. Hierbei werden genau genommen zwei Wirkverbindungen hergestellt.

Zum einen wird über die Übertragungswelle 8 eine (durch die Getriebeeinheit 2 untersetzende oder übersetzende) Wirkverbindung der Abtriebswelle 20 der Antriebsvorrichtung 5 mit einem (nicht dargestellten) Antriebseingang des anzutreibenden Systems 24 hergestellt, wobei der Antriebseingang des anzutreibenden Systems 24 unmittelbar mit einem Getriebeabtrieb 25 der Getriebeeinheit 2 wirkverbunden wird.

Zum anderen wird auch eine drehmomentabstützende Verbindung eines Antriebs-Drehmomentabstützelements, nämlich in diesem Ausführungsbeispiel eines Antriebsgehäuses 26 der Antriebsvorrichtung 5 zu einem Drehmomentabstützelement, beispielsweise zu einer Haltevorrichtung 27 oder zu einem Gehäuse, des anzutreibenden Systems 24 hergestellt.

### Bezugszeic henliste:

- 1: Getriebesystem
- 2: Getriebeeinheit
- 3: Drehmomentabstützelement
- 4: Ankoppelvorrichtung
- 5: drehmomenteinspeisende Antriebsvorrichtung
- 6: Anbauelement
- 7: Ankoppelvorrichtungsgehäuse
- 8: Übertragungswelle
- 9: Getriebeeingang
- 10: Abtriebsende
- 11: Motorflansch-Anbauelement
- 12: Motorflansch
- 13: Motorflansch-Gegenanbauelement
- 14: Ausgleichshülse
- 15: Klemmring
- 16: Wälzlager
- 17: Wellendichtung
- 18: Außenverzahnung
- 19: Antriebsende
- 20: Abtriebswelle
- 21: Spannschraube
- 22: axiale Bohrung
- 23: Befestigungsschrauben
- 24: anzutreibendes System
- 25: Getriebeabtrieb
- 26: Antriebsgehäuse
- 27: Haltevorrichtung

## Patentansprüche

1. Verfahren zum Herstellen eines Getriebesystems (1), welches die folgenden Schritte aufweist:
a. Bereitstellen einer Vielzahl von Getriebeeinheiten (2), die sich in der Bauform und/oder hinsichtlich des Übersetzungsverhältnisses und/oder eines Drehmomentparameters und/oder in der Größe und/oder hinsichtlich des Materials voneinander unterscheiden und die jeweils ein für alle Getriebeeinheiten (2) gleiches Drehmomentabstützelement (3) zur Fixierung an einer Ankoppelvorrichtung aufweisen,
b. Bereitstellen einer Vielzahl von Ankoppelvorrichtungen (4), von denen jede zum drehmomentübertragenden Ankoppeln einer drehmomenteinspeisenden Antriebsvorrichtung (5), insbesondere eines Antriebsmotors, an eine der Getriebeeinheiten (2) ausgebildet ist und von denen jede ein für alle Getriebeeinheiten (2) gleiches Anbauelement (6) aufweist, das als Gegenstück zu den gleichen Drehmomentabstützelementen (3) derart ausgebildet, insbesondere dimensioniert, ist, dass jede Getriebeeinheit (2) der Vielzahl von Getriebeeinheiten (2) an jede der Ankoppelvorrichtungen (4) montierbar ist, und von denen jede jeweils eine Übertragungswellen-Aufnahme zur rotierbaren Lagerung einer Übertragungswelle (8) aufweist,
c. Auswählen einer Getriebeeinheit (2) aus der Vielzahl von Getriebeeinheiten (2) und Auswählen einer Ankoppelvorrichtung (4) aus der Vielzahl von Ankoppelvorrichtungen (4),
d. Bereitstellen einer Vielzahl von Übertragungswellen (8), von denen jede ein Antriebsende (19) aufweist, das dazu ausgebildet und bestimmt ist, mit einem Endabschnitt einer Abtriebswelle (20) der drehmomenteinspeisenden Antriebsvorrichtung (5), insbesondere mit einer Abtriebswelle (20) des Antriebsmotors, mittels eines Klemmrings drehfest und kraftschlüssig verbunden zu werden, und die sich in der Form und/oder in der Größe und/oder hinsichtlich des Materials und/oder durch die Ausbildung des Antriebsendes (19) voneinander unterscheiden, und von denen jede ein Abtriebsende (10) aufweist, wobei die Abtriebsenden (10) als, insbesondere formschlüssig einfügbare, Gegenstücke zu Getriebeeingängen (9) der Getriebeeinheiten (2) ausgebildet sind,
e. Auswählen einer Übertragungswelle (8) aus der Vielzahl von Übertragungswellen (8),
f. Montieren der ausgewählten Übertragungswelle (8) in die Übertragungswellen-Aufnahme der ausgewählten Ankoppelvorrichtung (4),
g. Montieren der ausgewählten Getriebeeinheit (2) an die ausgewählte Ankoppelvorrichtung (4) durch Herstellen einer drehmomentübertragenden Verbindung der Übertragungswelle (8) mit einem Getriebeeingang (9) und durch Herstellen einer drehmomentabstützenden Verbindung zwischen einem Ankoppelvorrichtungsgehäuse (7) und dem Drehmomentabstützelement der ausgewählten Getriebeeinheit (2).

2. Verfahren nach Anspruch 1, **dadurch gekennzeichnet, dass**
a. die Getriebeeinheiten (2) der Vielzahl von Getriebeeinheiten (2) jeweils einen Getriebeeingang (9) aufweisen, wobei die Getriebeeingänge (9) der Vielzahl von Getriebeeinheiten (2) gleich ausgebildet sind, oder dass
b. die Getriebeeinheiten (2) der Vielzahl von Getriebeeinheiten (2) jeweils einen Getriebeeingang (9) aufweisen, wobei die Getriebeeingänge (9) der Vielzahl von Getriebeeinheiten (2) gleich ausgebildet sind und dass durch Einstecken des Abtriebsendes (10) in den Getriebeeingang (9) die drehmomentübertragende Verbindung der Übertragungswelle (8) mit einem Getriebeeingang (2) hergestellt wird.

3. Verfahren nach Anspruch 1 oder 2, **dadurch gekennzeichnet, dass**
a. jedes Abtriebsende (10) eine Verzahnung, insbesondere eine Außenverzahnung (18), aufweist, oder dass
b. jedes Abtriebsende (10) eine Außenverzahnung (18), aufweist und die Außenverzahnung mit wenigstens einer Verzahnung des Getriebeeingangs in kämmendem Zahneingriff gebracht wird, oder dass
c. jedes Abtriebsende (10) eine Außenverzahnung (18), aufweist und die Außenverzahnung (18) mit mehreren Verzahnungen des Getriebeeingangs (9) in kämmendem Zahneingriff gebracht wird, die durch Exzenterwellenaußenverzahnungen der mehreren Exzenterwellen einer als Zykloidgetriebe ausgebildeten Getriebeeinheit (2) gebildet sind.

4. Verfahren nach einem der Ansprüche 1 bis 3, **dadurch gekennzeichnet, dass**
a. das Antriebsende (19) jeder Übertragungswelle (8) als eine geschlitzte Hohlwelle mit einer axialen Bohrung (22) ausgebildet ist und/oder dass
b. das Antriebsende (19) jeder Übertragungswelle (8) eine axiale Bohrung (22) aufweist, und/oder dass
c. mehrere Übertragungswellen (8) der Vielzahl von Übertragungswellen (8) jeweils eine axiale Bohrung (22) aufweisen, wobei der Innendurchmesser der axialen Bohrungen (22) gleich ist.

5. Verfahren nach einem der Ansprüche 1 bis 4, **gekennzeichnet durch** die weiteren Schritte:
a. Bereitstellen einer Vielzahl von, insbesondere zylinderförmigen und/oder geschlitzten, Ausgleichshülsen (14), die sich in Form und/oder Größe und/oder Material und/oder Hülseninnendurchmesser voneinander unterscheiden und die formschlüssig in die axiale Bohrung einfügbar sind,
b. Auswählen einer Ausgleichshülse (14) aus der Vielzahl von Ausgleichshülsen (14) und
c. Montieren der ausgewählten Ausgleichshülse (14) in die axiale Bohrung (22) der ausgewählten Übertragungswelle (8).

6. Verfahren nach einem der Ansprüche 1 bis 5, **dadurch gekennzeichnet, dass** das Anbauelement (6), insbesondere axial verlaufende, Gewindebohrungen für Befestigungsschrauben zum Befestigen einer Getriebeeinheit (2) aufweist.

7. Verfahren nach einem der Ansprüche 1 bis 6, **dadurch gekennzeichnet, dass**
a. wenigstens ein Teil des Anbauelements (6) durch einen Abschnitt des Ankoppelvorrichtungsgehäuses (7) gebildet ist, oder dass
b. wenigstens ein Teil des Anbauelements (6) durch einen Abschnitt des Ankoppelvorrichtungsgehäuses (7) gebildet ist, wobei eine in dem Ankoppelvorrichtungsgehäuse (7) ausgebildete Aufnahme, insbesondere einen innen umlaufenden Falz und/oder einen Axialanschlag aufweist.

8. Verfahren nach Anspruch 7, **dadurch gekennzeichnet, dass** sich die Ankoppelvorrichtungsgehäuse (7) in der Bauform und/oder in der Größe und/oder hinsichtlich des Materials voneinander unterscheiden und dass jedes Ankoppelvorrichtungsgehäuse (7) ein Motorflansch-Anbauelement (11) aufweist, wobei die Motorflansch-Anbauelemente (11) alle gleich ausgebildet sind.

9. Verfahren nach Anspruch 8, **gekennzeichnet durch** die weiteren Schritte:
a. Bereitstellen einer Vielzahl von Motorflanschen (12), von denen jeder zum unmittelbaren Ankoppeln an die drehmomenteinspeisenden Antriebsvorrichtung (5), insbesondere an den Antriebsmotor, ausgebildet ist, wobei jeder Motorflansch (12) ein Motorflansch-Gegenanbauelement (13) aufweist, das als Gegenstück zu den gleichen Motorflansch-Anbauelementen ((11) derart ausgebildet, insbesondere dimensioniert, ist, dass jeder Motorflansch (12) der Vielzahl von Motorflanschen (12) an jedes der Ankoppelvorrichtungsgehäuse (7) montierbar ist,
b. Auswählen eines Motorflanschs (12) aus der Vielzahl von Motorflanschen (12) und
c. Montieren des ausgewählten Motorflanschs (12) an das Ankoppelvorrichtungsgehäuse (7) der ausgewählten Ankoppelvorrichtung (4).

10. Verfahren nach einem der Ansprüche 1 bis 9, **dadurch gekennzeichnet, dass**
a. jede Getriebeeinheit (2) der Vielzahl von Getriebeeinheiten (2) als vormontierte und funktionsfähige modulare Baueinheit ausgebildet ist, und/oder dass
b. jede Getriebeeinheit (2) ein Zykloidgetriebe aufweist.

11. Verfahren nach einem der Ansprüche 1 bis 10, **dadurch gekennzeichnet, dass**
a. jede Ankoppelvorrichtung (4) der Vielzahl von Ankoppelvorrichtungen (4) als vormontierte und funktionsfähige modulare Baueinheit ausgebildet ist und/oder dass
b. sich die Ankoppelvorrichtungen (4) der Vielzahl von Ankoppelvorrichtungen (4) in der Bauform und/oder hinsichtlich in der Größe und/oder hinsichtlich des Materials voneinander unterscheiden.

12. Verfahren nach einem der Ansprüche 1 bis 11, **dadurch gekennzeichnet, dass** das Getriebesystem (1) als fertig montierte und funktionsfähige Baueinheit hergestellt wird, die an eine drehmomenteinspeisende Antriebsvorrichtung (5) und/oder ein anzutreibendes System (24) ankoppelbar ist, ohne hierfür Teile der Ankoppelvorrichtung (4) demontieren zu müssen.

13. Verfahren zum Herstellen eines Antriebssystems, **dadurch gekennzeichnet, dass** zunächst ein Getriebesystem (1) nach einem der Ansprüche 1 bis 12 hergestellt wird und dass anschließend eine drehmomenteinspeisende Antriebsvorrichtung (5) an das Getriebesystem (1) angekoppelt wird.

14. Getriebesystem (1), das gemäß einem Verfahren nach einem der Ansprüche 1 bis 12 hergestellt ist.

15. Antriebssystem, das eine drehmomenteinspeisende Antriebsvorrichtung (5), insbesondere eine drehmomenteinspeisende Antriebsvorrichtung (5), die ein elektrischer Antriebsmotor ist oder die einen elektrischen, Antriebsmotor aufweist oder die ein Getriebemotor ist oder einen Getriebemotor aufweist, und ein Getriebesystem (1) nach Anspruch 14 beinhaltet.

## Claims

1. Method for producing a gear system (1), which comprises the following steps:
a. providing a multiplicity of gear units (2) which differ from one another in design and/or in respect of the transmission ratio and/or a torque parameter and/or in size and/or in respect of the material and which each have a torque support element (3), which is identical for all of the gear units (2), for fixing to a coupling device,
b. providing a multiplicity of coupling devices (4), each of which is designed for torque-transmitting coupling of a torque-feeding drive device (5), in particular a drive motor, to one of the gear units (2), and each of which has an attachment element (6) which is identical for all of the gear units (2) and is designed, in particular dimensioned, as a counterpart to the identical torque support elements (3) in such a manner that each gear unit (2) of the multiplicity of gear units (2) can be mounted on each of the coupling devices (4), and each of which in each case has a transmission shaft receptacle for the rotatable mounting of a transmission shaft (8),
c. selecting a gear unit (2) from the multiplicity of gear units (2) and selecting a coupling device (4) from the multiplicity of coupling devices (4),
d. providing a multiplicity of transmission shafts (8), each of which has a drive end (19) which is designed and intended to be connected to an end portion of an output shaft (20) of the torque-feeding drive device (5), in particular to an output shaft (20) of the drive motor, by means of a clamping ring for conjoint rotation and with a force fit, and which differ from one another in shape and/or in size and/or in respect of the material and/or by the design of the drive end (19), and each of which has an output end (10), wherein the output ends (10) are designed as counterparts, which are in particular insertable with a form fit, to gear inputs (9) of the gear units (2),
e. selecting a transmission shaft (8) from the multiplicity of transmission shafts (8),
f. mounting the selected transmission shaft (8) in the transmission shaft receptacle of the selected coupling device (4),
g. mounting the selected gear unit (2) onto the selected coupling device (4) by producing a torque-transmitting connection of the transmission shaft (8) to a gear input (9) and by producing a torque-supporting connection between a coupling device housing (7) and the torque support element of the selected gear unit (2).

2. Method according to Claim 1, **characterized in that**
a. the gear units (2) of the multiplicity of gear units (2) each have a gear input (9), the gear inputs (9) of the multiplicity of gear units (2) being identical in design, or **in that**
b. the gear units (2) of the multiplicity of gear units (2) each have a gear input (9), the gear inputs (9) of the multiplicity of gear units (2) being identical in design, and **in that** the torque-transmitting connection of the transmission shaft (8) to a gear input (2) is produced by plugging the output end (10) into the gear input (9).

3. Method according to Claim 1 or 2, **characterized in that**
a. each output end (10) has a toothing, in particular an external toothing (18), or **in that**
b. each output end (10) has an external toothing (18), and the external toothing is brought into meshing tooth engagement with at least one toothing of the gear input, or **in that**
c. each output end (10) has an external toothing (18), and the external toothing (18) is brought into meshing tooth engagement with a plurality of toothings of the gear input (9) that are formed by eccentric shaft external toothings of the plurality of eccentric shafts of a gear unit (2) which is in the form of a cycloidal gearbox.

4. Method according to one of Claims 1 to 3, **characterized in that**
a. the drive end (19) of each transmission shaft (8) is designed as a slotted hollow shaft with an axial bore (22), and/or **in that**
b. the drive end (19) of each transmission shaft (8) has an axial bore (22), and/or **in that**
c. a plurality of transmission shafts (8) of the multiplicity of transmission shafts (8) each have an axial bore (22), with the inside diameter of the axial bores (22) being identical.

5. Method according to one of Claims 1 to 4, **characterized by** the further steps of:
a. providing a multiplicity of, in particular cylindrical and/or slotted, compensating sleeves (14) which differ from one another in shape and/or size and/or material and/or sleeve inside diameter and which can be inserted into the axial bore with a form fit,
b. selecting a compensating sleeve (14) from the multiplicity of compensating sleeves (14) and
c. mounting the selected compensating sleeve (14) in the axial bore (22) of the selected transmission shaft (8).

6. Method according to one of Claims 1 to 5, **characterized in that** the attachment element (6) has, in particular axially running, threaded bores for fastening screws for the fastening of a gear unit (2).

7. Method according to one of Claims 1 to 6, **characterized in that**
a. at least part of the attachment element (6) is formed by a portion of the coupling device housing (7), or **in that**
b. at least part of the attachment element (6) has by a portion of the coupling device housing (7), a receptacle which is formed in the coupling device housing (7) in particular having an inner peripheral fold and/or an axial stop.

8. Method according to Claim 7, **characterized in that** the coupling device housings (7) differ from one another in design and/or in size and/or in respect of the material, and **in that** each coupling device housing (7) has a motor flange attachment element (11), the motor flange attachment elements (11) all being identical in design.

9. Method according to Claim 8, **characterized by** the further steps of:
a. providing a multiplicity of motor flanges (12), each of which is designed for directly coupling to the torque-feeding drive device (5), in particular to the drive motor, each motor flange (12) having a motor flange mating attachment element (13) which is designed, in particular dimensioned, as a counterpart to the identical motor flange attachment elements (11) in such a manner that each motor flange (12) of the multiplicity of motor flanges (12) can be mounted on each of the coupling device housings (7),
b. selecting a motor flange (12) from the multiplicity of motor flanges (12) and
c. mounting the selected motor flange (12) on the coupling device housing (7) of the selected coupling device (4).

10. Method according to one of Claims 1 to 9, **characterized in that**
a. each gear unit (2) of the multiplicity of gear units (2) is designed as a preassembled and functionally capable modular construction unit, and/or **in that**
b. each gear unit (2) comprises a cycloidal gearbox.

11. Method according to one of Claims 1 to 10, **characterized in that**
a. each coupling device (4) of the multiplicity of coupling devices (4) is designed as a preassembled and functionally capable modular construction unit, and/or **in that**
b. the coupling devices (4) of the multiplicity of coupling devices (4) differ from one another in design and/or in respect of the size and/or in respect of the material.

12. Method according to one of Claims 1 to 11, **characterized in that** the gear system (1) is produced as a ready assembled and functionally capable construction unit which can be coupled to a torque-feeding drive device (5) and/or to a system (24) to be driven, without parts of the coupling device (4) having to be removed for this purpose.

13. Method for producing a drive system, **characterized in that** first of all a gear system (1) according to one of Claims 1 to 12 is produced, and **in that** subsequently a torque-feeding drive device (5) is coupled to the gear system (1).

14. Gear system (1) which is produced in accordance with a method according to one of Claims 1 to 12.

15. Drive system which comprises a torque-feeding drive device (5), in particular a torque-feeding drive device (5) which is an electric drive motor or which has an electric drive motor or which is a geared motor or has a geared motor, and a gear system (1) according to Claim 14.

## Revendications

1. Procédé de fabrication d'un système de transmission (1), qui comprend les étapes suivantes :
a. prévoir une pluralité d'unités de transmission (2) qui diffèrent les unes des autres par leur forme de construction et/ou en ce qui concerne leur rapport de transmission et/ou par un paramètre de couple et/ou par leur taille et/ou en ce qui concerne leur matériau, et qui présentent chacune un élément (3) de support de couple identique pour toutes les unités de transmission (2) pour la fixation sur un dispositif de couplage,
b. prévoir une pluralité de dispositifs de couplage (4), dont chacun est conçu pour l'accouplement, avec transmission du couple, d'un dispositif d'entraînement (5) fournissant un couple, en particulier d'un moteur d'entraînement, à l'une des unités de transmission (2), et dont chacun présente un élément de montage (6) identique pour toutes les unités de transmission (2), qui, en tant que contrepartie des mêmes éléments (3) de support de couple, est conçu, en particulier dimensionné, de telle sorte que chaque unité de transmission (2) de la pluralité d'unités de transmission (2) puisse être montée sur chacun des dispositifs de couplage (4), et dont chacun présente respectivement un logement d'arbre de transmission pour le montage rotatif d'un arbre de transmission (8),
c. sélectionner une unité de transmission (2) parmi la pluralité d'unités de transmission (2) et sélectionner un dispositif de couplage (4) parmi la pluralité de dispositifs de couplage (4),
d. prévoir une pluralité d'arbres de transmission (8), dont chacun présente une extrémité d'entraînement (19) qui est conçue et destinée à être reliée de manière solidaire en rotation et par adhérence à une section d'extrémité d'un arbre de sortie (20) du dispositif d'entraînement (5) fournissant le couple, en particulier à un arbre de sortie (20) du moteur d'entraînement, au moyen d'une bague de serrage, et qui diffèrent les unes des autres par la forme et/ou la taille et/ou en ce qui concerne le matériau et/ou par la réalisation de l'extrémité d'entraînement (19), et dont chacune présente une extrémité de sortie (10), les extrémités de sortie (10) étant réalisées sous la forme de contreparties, qui sont aptes à être insérées en particulier par complémentarité de forme, sur des entrées de transmission (9) des unités de transmission (2),
e. sélectionner un arbre de transmission (8) parmi la pluralité d'arbres de transmission (8),
f. monter l'arbre de transmission sélectionné (8) dans le logement d'arbre de transmission du dispositif de couplage (4) sélectionné,
g. monter l'unité de transmission sélectionnée (2) sur le dispositif de couplage sélectionné (4) en établissant une connexion de transmission de couple de l'arbre de transmission (8) avec une entrée de transmission (9) et en établissant une connexion de support de couple entre un boîtier (7) de dispositif de couplage et l'élément de support de couple de l'unité de transmission (2) sélectionnée.

2. Procédé selon la revendication 1, **caractérisé en ce que**
a. les unités de transmission (2) de la pluralité d'unités de transmission (2) présentent chacune une entrée de transmission (9), les entrées de transmission (9) de la pluralité d'unités de transmission (2) étant formées de la même manière, ou **en ce que**
b. les unités de transmission (2) de la pluralité d'unités de transmission (2) présentent chacune une entrée de transmission (9), les entrées de transmission (9) de la pluralité d'unités de transmission (2) étant de conception identique, et **en ce que** l'accouplement de transmission de couple de l'arbre de transmission (8) avec une entrée de transmission (2) est réalisée par l'insertion de l'extrémité de sortie (10) dans l'entrée de transmission (9).

3. Procédé selon la revendication 1 ou 2, **caractérisé en ce que**
a. chaque extrémité de sortie (10) présente une denture, en particulier une denture extérieure (18), ou **en ce que**
b. chaque extrémité de sortie (10) présente une denture extérieure (18), et la denture extérieure est amenée en prise d'engrènement avec au moins une denture de l'entrée de transmission, ou **en ce que**
c. chaque extrémité de sortie (10) présente une denture extérieure (18) et la denture extérieure (18) est amenée en engrènement avec une pluralité de dentures de l'entrée de transmission (9), qui sont formées par des dentures extérieures d'arbres excentriques parmi les plusieurs arbres excentriques d'une unité de transmission (2) conçue sous la forme d'un engrenage cycloïdal.

4. Procédé selon l'une des revendications 1 à 3, **caractérisé en ce que**
a. l'extrémité d'entraînement (19) de chaque arbre de transmission (8) est conçue sous la forme d'un arbre creux fendu avec un alésage axial (22) et/ou **en ce que**
b. l'extrémité d'entraînement (19) de chaque arbre de transmission (8) présente un alésage axial (22), et/ou **en ce que**
c. plusieurs arbres de transmission (8) de la pluralité d'arbres de transmission (8) présentent chacun un alésage axial (22), le diamètre intérieur des alésages axiaux (22) étant identique.

5. Procédé selon l'une des revendications 1 à 4, **caractérisé par** les étapes supplémentaires suivantes :
a. prévoir une pluralité de manchons de compensation (14), en particulier cylindriques et/ou fendus, qui diffèrent les uns des autres par leur forme et/ou leur taille et/ou leur matériau et/ou leur diamètre intérieur de manchon et qui sont aptes à être insérés par complémentarité de forme dans l'alésage axial,
b. sélectionner un manchon de compensation (14) parmi la pluralité de manchons de compensation (14), et
c. monter le manchon de compensation (14) sélectionné dans l'alésage axial (22) de l'arbre de transmission (8) sélectionné.

6. Procédé selon l'une des revendications 1 à 5, **caractérisé en ce que** l'élément de montage (6) présente des trous taraudés, notamment axiaux, pour des vis de fixation d'une unité de transmission (2).

7. Procédé selon l'une des revendications 1 à 6, **caractérisé en ce que**
a. au moins une partie de l'élément de montage (6) est formée par une section du boîtier (7) de dispositif de couplage, ou que
b. au moins une partie de l'élément de montage (6) présente par une section du boîtier (7) de dispositif de couplage, un logement formé dans le boîtier (7) de dispositif de couplage comportant notamment une feuillure périphérique intérieure et/ou une butée axiale.

8. Procédé selon la revendication 7, **caractérisé en ce que** les boîtiers (7) de dispositifs de couplage diffèrent les uns des autres par leur forme de construction et/ou par leur taille et/ou par leur matériau, et **en ce que** chaque boîtier (7) de dispositif de couplage présente un élément (11) de montage de bride de moteur, les éléments (11) de montage de bride de moteur étant tous de même forme.

9. Procédé selon la revendication 8, **caractérisé par** les étapes supplémentaires suivantes :
a. prévoir une pluralité de brides de moteur (12), dont chacune est conçue pour être reliée directement au dispositif d'entraînement (5) fournissant un couple, en particulier au moteur d'entraînement, chaque bride de moteur (12) présentant un élément complémentaire (13) de montage de bride de moteur, qui, en tant que contrepartie des mêmes éléments (11) de montage de bride de moteur, est conçu, en particulier dimensionné, de telle sorte que chaque bride de moteur (12) de la pluralité de brides de moteur (12) puisse être montée sur chacun des boîtiers (7) de dispositif de couplage,
b. sélectionner une bride de moteur (12) parmi la pluralité de brides de moteur (12), et
c. monter la bride de moteur (12) sélectionnée sur le boîtier (7) de dispositif de couplage du dispositif de couplage (4) sélectionné.

10. Procédé selon l'une quelconque des revendications 1 à 9, **caractérisé en ce que**
a. chaque unité de transmission (2) de la pluralité d'unités de transmission (2) est conçue sous la forme d'une unité modulaire préassemblée et fonctionnelle, et/ou **en ce que**
b. chaque unité de transmission (2) comprend un engrenage cycloïdal.

11. Procédé selon l'une des revendications 1 à 10, **caractérisé en ce que**
a. chaque dispositif de couplage (4) de la pluralité de dispositifs de couplage (4) est conçu sous la forme d'une unité modulaire préassemblée et fonctionnelle et/ou que
b. les dispositifs de couplage (4) de la pluralité de dispositifs de couplage (4) diffèrent les uns des autres par leur forme de construction et/ou par leur taille et/ou en ce qui concerne leur matériau.

12. Procédé selon l'une des revendications 1 à 11, **caractérisé en ce que** le système de transmission (1) est fabriqué sous la forme d'une unité de construction entièrement montée et fonctionnelle, qui peut être reliée à un dispositif d'entraînement (5) fournissant un couple et/ou à un système (24) à entraîner, sans devoir pour cela démonter des parties du dispositif de couplage (4).

13. Procédé de fabrication d'un système d'entraînement, **caractérisé en ce qu'**on fabrique d'abord un système de transmission (1) selon l'une des revendications 1 à 12 et **en ce qu'**on relie ensuite au système de transmission (1) un dispositif d'entraînement (5) fournissant un couple.

14. Système de transmission (1) fabriqué selon un procédé selon l'une quelconque des revendications 1 à 12.

15. Système d'entraînement comprenant un dispositif d'entraînement (5) à transmission de couple, notamment un dispositif d'entraînement (5) à transmission de couple qui est un moteur d'entraînement électrique ou qui comprend un moteur d'entraînement électrique ou qui est un motoréducteur ou qui comprend un motoréducteur, et un système de transmission (1) selon la revendication 14.
